# EUROPEAN PATENT SPECIFICATION

(11) **EP 1 236 527 B1**
(45) Date of publication and mention of the grant of the patent: **10.12.2003**
(21) Application number: 02251378.2
(22) Date of filing: 27.02.2002
(51) Int. Cl.: B23B 27/00, B23B 29/12, B23Q 5/02

(54) **Machining method for difficult-to-machine material and machining tool therefor**
Bearbeitungsverfahren für schwer zu bearbeitende Materialien und Bearbeitungswerkzeug dafür
Méthode d'usinage pour matériau difficile à usiner et outil d'usinage pour cette méthode

(30) Priority: 02.03.2001 JP 2001059319
(43) Date of publication of application: 04.09.2002
(73) Proprietor: National Institute of Advanced Industrial Science and Technology, Tokyo (JP)
(72) Inventor: Yamashita, Isamu, Ogori-shi, Fukuoka (JP); Doutsu, Tsuyoshi, Miyaki-gun, Saga (JP); Tanaka, Hitoshi, Kyoto-shi, Kyoto (JP)
(74) Representative: Baverstock, Michael George Douglas

(56) References cited:
- EP-A- 0 489 701
- EP-A- 1 002 604
- GB-A- 2 016 350
- US-A- 4 864 904
- US-A- 5 584 616
- PATENT ABSTRACTS OF JAPAN vol. 015, no. 032 (M-1073), 25 January 1991 (1991-01-25) -& JP 02 274401 A (TAGA ELECTRIC CO LTD), 8 November 1990 (1990-11-08)

## Description

The present invention relates to a machining tool and method as described in the preamble of claim 1, respectively claim 2. Such a tool, respectively method, is known from document EP-A-1002604.

Since the hardness of a difficult-to-machine material such as fully sintered ceramic materials and quench-hardened high-chromium cast iron materials is extremely high, machining, e.g., cutting, lathing and drilling, of a workpiece of these materials cannot be conducted without using a diamond tool or CBN (cubic boron nitride) tool. Due to the expensiveness of these machining tools and their relatively short durability life resulting in high costs of the machine-worked products, abrasive grinding has heretofore been the only practical machining method for these difficult-to-machine materials.

The above-mentioned abrasive grinding method, however, has problems that machining efficiency is low and that the method is hardly applicable to work for a complicated form such as grooving and screw-thread cutting so that development of a versatile machining method not relying on grinding is eagerly desired in machining technology.

In view of the above described problems and disadvantages in the conventional machining method for difficult-to-machine materials, the present invention has an object to provide a highly efficient novel method of machining a high-hardness material, which is taken as difficult-to-machine in the prior art, using a machining tool made from a relatively inexpensive material, as well as to provide such a machining tool used in the method.

Thus, the machining method for a workpiece made from a difficult-to-machine material provided by the invention comprises the features of claim 2.

The machining tool of the present invention for use in the above-defined inventive machining method comprises the features of claim 1. An advantageous realisation of the method is disclosed in the dependent claim 3.

In the drawings:
Figure 1 is a schematic illustration of a side view of a machine for practicing the inventive method.
Figures 2A, 2B and 2C are each an illustration showing the cutting chip of the inventive machining tool.
Figure 3 is a perspective view of the cutting chip illustrated in Figures 2A to 2C.
Figure 4 is a graph showing the major flank abrasion of the tool as a function of the work time in Example 1.
Figure 5 is a graph showing the undeformed chip thickness as a function of the work time in Example 1.
Figure 6 is a graph showing the cutting force as a function of the work time in Example 2.
Figure 7 is a graph showing the major flank abrasion as a function of the work time in Example 2.
Figure 8 is a graph showing the undeformed chip thickness as a function of the work time in Example 2.

In the following, the present invention is described in detail with reference to the accompanying drawings.

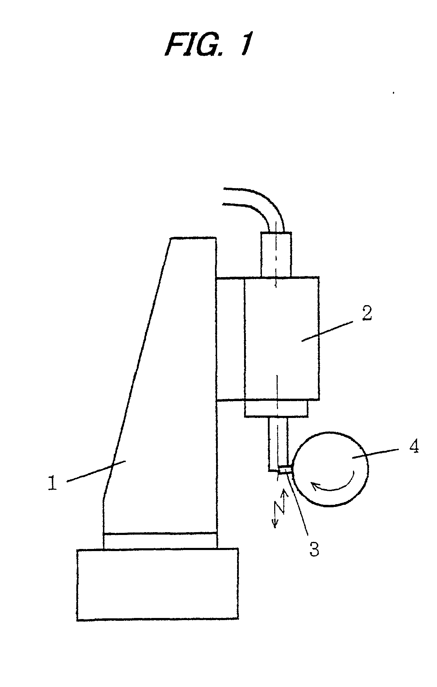

Figure 1 is a schematic side view of a machining system for practicing the inventive machining method, in which a cutting tool 3 of the invention is mounted on the lower end of the ultrasonic vibrator 2 supported by the support 1 standing on a bed and the cutting tool 3 is put at the workpiece 4 rotating in the direction indicated by the arrow while the cutting tool 3 is under ultrasonic vibrations in the up-and-down direction indicated by the double-sided cranked arrow by operating the ultrasonic vibrator 2.

The frequency of the ultrasonic vibrations is preferably in the range from 20 kHz to 75 kHz. The cutting tool 3 has a chip made from a cemented metal carbide such as those of tungsten carbide cemented with metallic cobalt and optionally coated by applying the PVD (physical vapor deposition) method. Several grades of coated chips are available as commercial products including KC730 (a product by Kennametal, Inc.) and UP20M (a product by Mitsubishi Material Co.) which can be used advantageously in the inventive method.

The inventive method under ultrasonic vibrations of the tool is applicable to a hardly machinable workpiece for which conventional diamond chip tools can never be used under ultrasonic vibration due to instantaneous chipping of the diamond chip.

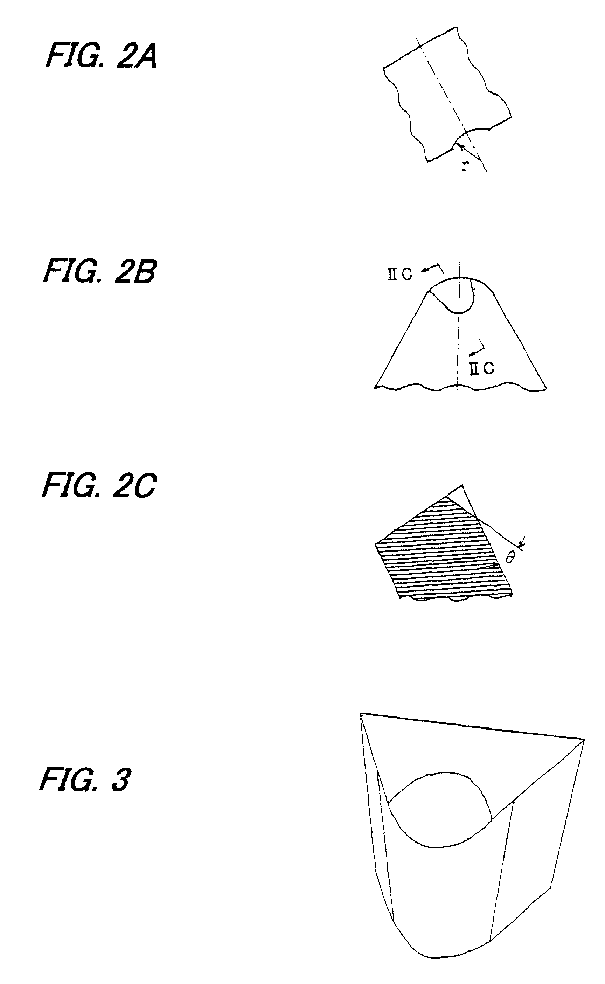

Figures 2A, 2B and 2C are each a schematic illustration of the chip portion of the inventive machining tool, of which Figure 2A is a side elevational view of the chip, Figure 2B is a plan view of the chip showing the cutting face and Figure 2C is a cross sectional view of the chip as cut and viewed along the arrows IIC-IIC in Figure 2B. Figure 3 is a perspective view of the same chip. As is shown in these figures, the chip is provided with a round-bottom groove having a radius of curvature r, which is preferably 0.2 to 0.5 mm, and running with an inclination angle of θ, which is 15 to 60° or, preferably, 25 to 45°.

Although, needless to say, chips of a cemented metal carbide are very inexpensive as compared with diamond chips, conventional cemented metal carbide chips cannot be used for machining of a difficult-to-machine material such as fully sintered ceramic materials and quench-hardened high-chromium cast iron materials in a conventional working procedure due to substantial abrasive wearing of the chip resulting in rapid loss of cutting power within a short time. According to the general understanding in the art, these conventional chips cannot be used also in ultrasonic vibration-assisted machining work because of instantaneous chipping of the chip.

In contrast thereto, it is a quite unexpected discovery leading to the present invention that the cemented metal carbide chip having the above defined grooved structure is subject to little chipping damage when used even in machining of a hardly machinable workpiece under ultrasonic vibration assist. The machining conditions in this case are not particularly limitative and can be conventional. Accordingly, the inventive method is industrially very advantageous because hardly machinable workpieces can be worked at a high efficiency by using a very inexpensive tool leading to a great reduction of the costs of machining work.

In the following, the present invention is described in more detail by way of Examples.

### Example 1

The workpiece subjected to lathing work according to the invention was a sintered zirconia ceramic body having: a density of 5.98 g/cm³; hardness of 91 HRA; bending strength of 1200 MPa; and Young's modulus of 190 GPa. Several cutting chips of a cemented metal carbide were prepared from commercially available chips of KC730 and UP20M (*supra*) by forming a round-bottom groove according to the invention. The grooves had an angle of inclination θ of 0°, 15°, 30°, 45° or 60° and a radius of curvature r of the round bottom of 0.4 mm in each of the chips. The lathing test of the workpiece was conducted either without or with application of ultrasonic vibrations at a frequency of 40 kHz and with an amplitude of 11 µm as generated by the ultrasonic vibrator equipped in the machine system. The feed rate was 0.033 mm/revolution and the cutting speed was 11 m/minute.

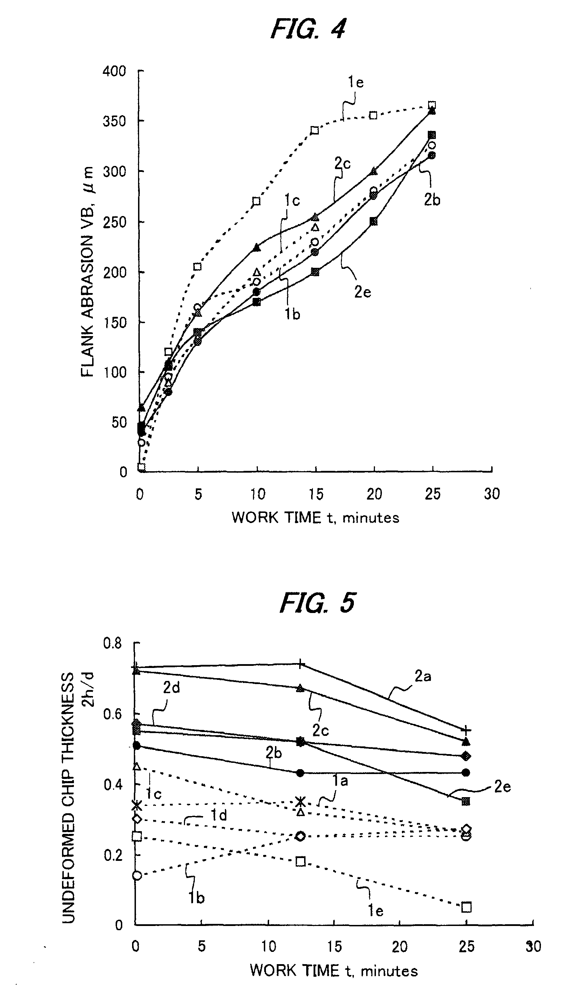

The results of the lathing tests are shown in Figures 4 and 5, of which Figure 4 is a graph showing the major flank abrasion VB in µm and Figure 5 shows the undeformed chip thickness each as a function of the work time in minutes. In these figures, the curves 1a to 1e and the curves 2a to 2e are for the results obtained without and with, respectively, application of the ultrasonic vibrations and the curves 1a and 2a, curves 1b and 2b, curves 1c and 2c, curves 1d and 2d and curves 1e and 2e are for the results obtained with the chips of which the round-bottom grooves had an inclination angle θ of 0°, 15°, 30°, 45° and 60°, respectively.

While the flank abrasion VB is usually increased as the work time is extended, it is understood from Figure 4 that the increase in VB is relatively small under application of the ultrasonic vibrations along with a relatively small dependency on the inclination angle θ. With regard to the undeformed chip thickness h, it is understood from Figure 5 that the values of h are generally large under application of the ultrasonic vibrations to give a higher working efficiency than in work without application of ultrasonic vibrations.

### Example 2

A machining test similar to that in Example 1 was undertaken using a workpiece of a quench-hardened high-chromium cast iron in place of the workpiece of sintered zirconia ceramic in Example 1. The lathing conditions included: an ultrasonic frequency of 20 kHz; feed rate of 0.05 mm/revolution; cutting speed of 10 m/minute; inclination angle θ of the round-bottom groove in the chip of 30°; and cutting depth of 0.25 mm, the other parameters being the same as in Example 1.

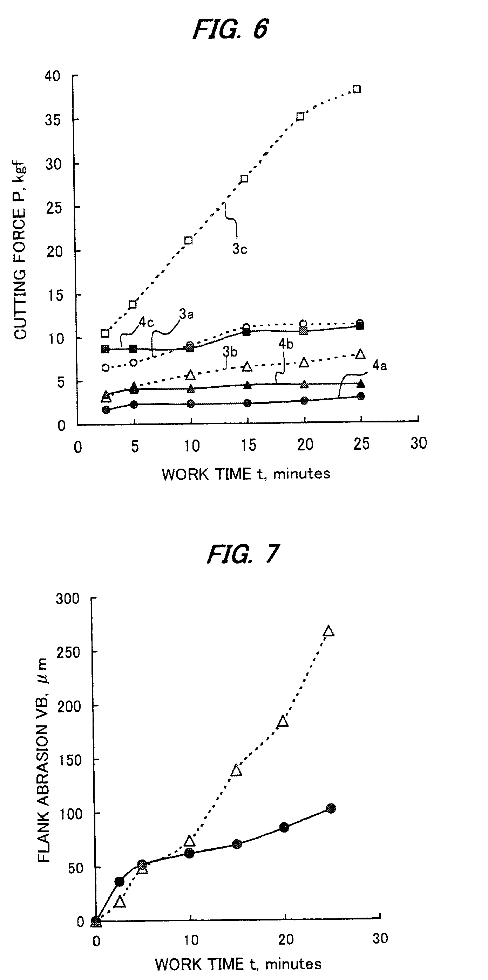

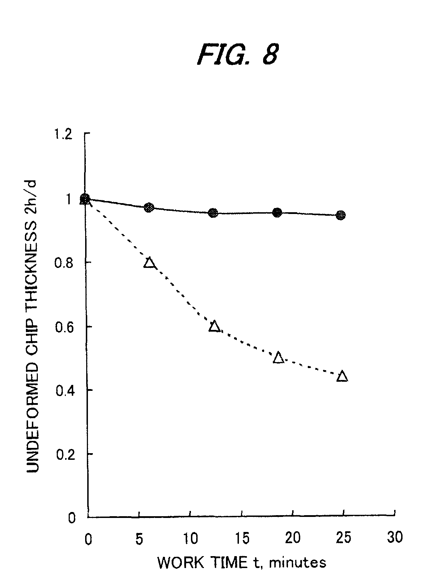

The results of the lathing test are shown in Figures 6, 7 and 8, of which Figure 6 is a graph showing the cutting force P in kgf, Figure 7 is a graph showing the flank abrasion VB in µm and Figure 8 is a graph showing the undeformed chip thickness 2h/d each as a function of the work time t in minutes. In these graphs, the solid-line curves are for the tests with application of the ultrasonic vibrations and the broken-line curves are for the tests without application of the ultrasonic vibrations. In Figure 6, the cutting force is recorded in three component forces including the major cutting force shown by the curves 3a and 4a, feed force shown by the curves 3b and 4b and thrust force shown by the curves 3c and 4c.

As is understood from Figure 6, each of the component forces of the cutting force, i.e. major cutting force, feed force and thrust force, is remarkably decreased by the application of the ultrasonic vibrations as compared with the tests without application of the ultrasonic vibrations. Figure 7 indicates that the flank abrasion VB can be greatly decreased by the application of the ultrasonic vibrations leading to a corresponding extension of the durability life of the cutting tool. In addition, Figure 8 indicates that the undeformed chip thickness h can be increased by the application of the ultrasonic vibrations contributing to improvements in working efficiency and working accuracy.

## Claims

1. A machining tool (3) for machining of a workpiece, said workpiece being made from a difficult-to-machine material, said machine tool comprising:
a cutting chip having a conically pointed end made from a cemented metal carbide, **characterized in that** said conically pointed end has a round-bottom groove running with an inclination of 15° to 60° relative to the cutting face of the chip, the round-bottom groove having a radius of curvature in the range from 0.2 mm to 0.5 mm.

2. A method for machining of a workpiece of a difficult-to-machine material by the use of a machining tool according to claim 1 with a cutting chip made from a cemented metal carbide and having a conically pointed end, **characterized in that** said method comprises the steps of:
(a) putting the end point of the cutting chip of the machining tool as defined in claim 1 at the workpiece to effect cutting of the workpiece; and
(b) applying ultrasonic vibrations (2) to the cutting chip in the direction of cutting.

3. The method as claimed in claim 2 in which the frequency of the ultrasonic vibrations is in the range from 20 kHz to 75 kHz.

## Patentansprüche

1. Bearbeitungswerkzeug (3) zum Bearbeiten eines Werkstücks, wobei das Werkstück aus einem schwer zu bearbeitenden Werkstoff besteht, das Bearbeitungswerkzeug enthält:
ein Schneidstück mit einem konisch zulaufenden Ende aus einem aufgeklebten Metallcarbid,
**dadurch gekennzeichnet, dass**
das konisch zulaufende Ende eine Rille mit abgerundetem Grund aufweist, die mit einer Neigung von 15° bis 60° in Bezug auf die Schneidfläche des Schneidstücks verläuft, wobei die Rille mit dem abgerundeten Grund einen Radius mit einer Krümmung im Bereich von 0,2 mm bis 0,5 mm aufweist.

2. Verfahren zur Bearbeitung eines Werkstücks aus einem schwer zu bearbeitenden Werkstoff unter Verwendung eines Bearbeitungswerkzeugs nach Anspruch 1, mit einem Schneidstück aus einem aufgeklebten Metallcarbid und mit einem konisch zulaufenden Ende,
**dadurch gekennzeichnet, dass**
das Verfahren folgende Schritte aufweist:
(a) Ansetzen des Endpunktes des Schneidstücks des Bearbeitungswerkzeugs gemäß Anspruch 1 an das Werkstück, um das Werkstück zu bearbeiten; und
(b) Aufbringen von Ultraschallschwingungen (2) auf das Schneidstück in Schneidrichtung.

3. Verfahren nach Anspruch 2, bei der sich die Frequenz der Ultraschallschwingungen in dem Bereich von 20 kHz bis 75 kHz befindet.

## Revendications

1. Outil d'usinage (3) pour usiner une pièce, ladite pièce étant réalisée en un matériau difficile à usiner, ledit outil d'usinage comprenant :
un ciseau de coupe présentant une extrémité à pointe conique en un carbure métallique cimenté, **caractérisé en ce que** ladite extrémité à pointe conique présente une rainure à fond rond s'étendant selon une inclinaison de 15° à 60° relativement à la face de coupe du ciseau, la rainure à fond rond ayant un rayon de courbure dans la plage de 0,2 mm à 0,5 mm.

2. Procédé d'usinage d'une pièce en un matériau difficile à usiner en utilisant un outil d'usinage selon la revendication 1 avec un ciseau de coupe réalisé en un carbure métallique cimenté et comportant une extrémité à pointe conique, **caractérisé en ce que** ledit procédé comprend les étapes consistant à :
(a) amener la pointe d'extrémité du ciseau de coupe de l'outil d'usinage tel que défini dans la revendication 1 à la pièce pour procéder à la coupe de la pièce ; et
(b) appliquer des vibrations ultrasoniques (2) au ciseau de coupe dans la direction de la coupe.

3. Procédé selon la revendication 2, où la fréquence des vibrations ultrasoniques se situe dans la plage de 20 kHz à 75 kHz.
